## Europäisches Patentamt
## European Patent Office
## Office européen des brevets

(11) Numéro de publication : **0 285 830 B1**

(12) # FASCICULE DE BREVET EUROPEEN

(45) Date de publication du fascicule du brevet :
06.03.91 Bulletin 91/10

(51) Int. Cl.⁵ : **A01K 91/06**

(21) Numéro de dépôt : 88103629.7

(22) Date de dépôt : 08.03.88

(54) **Accessoire de pêche.**

(30) Priorité : 08.04.87 CH 1345/87

(43) Date de publication de la demande :
12.10.88 Bulletin 88/41

(45) Mention de la délivrance du brevet :
06.03.91 Bulletin 91/10

(84) Etats contractants désignés :
BE DE ES FR GB IT NL SE

(56) Documents cités :
CH-A- 453 788
FR-A- 607 320
GB-A- 628 234
US-A- 2 731 758

(73) Titulaire : Crevoisier, René
CH-2714 Les Genevez (CH)

(72) Inventeur : Crevoisier, René
CH-2714 Les Genevez (CH)

(74) Mandataire : Finck, Dieter et al
Patentanwälte v. Füner, Ebbinghaus, Finck
Mariahilfplatz 2 & 3
W-8000 München 90 (DE)

## Description

La présente invention concerne un accessoire de pêche destiné à faciliter la prise du poisson lorsque celui-ci est pêché à l'aide d'un fil terminé par un hameçon.

Cette manière de prendre le poisson est, par exemple, utilisée dans la pêche à la ligne. Le fil, dans ce cas, comporte deux parties. La première partie est constituée d'un fil long et de forte section venant s'enrouler sur le moulinet d'une canne à pêche. Le fil de la deuxième partie est court et fin, pour ne pas éveiller l'attention du poisson, et il porte à son extrémité libre l'hameçon.

Lorsque le pêcheur sent que le poisson est en train de mordre à l'hameçon, il doit, au moyen d'un brusque mouvement du poignet tenant la ligne, faire pénétrer l'hameçon dans la mâchoire du poisson. Cette opération s'appelle ferrer le poisson.

Etant donné que la pointe de l'hameçon est acérée, une traction modérée sur le fil est généralement suffisante pour faire pénétrer l'hameçon dans la chair du poisson. Le risque de rupture du fil, alors que le pêcheur est en train de ferrer le poisson, est donc très faible.

Une fois accroché à l'hameçon, le poisson commence à se débattre énergiquement et, s'il a une taille suffisante, il peut produire des tractions importantes sur le fil, surtout au moment où il frappe le fil avec sa queue.

C'est dans cette phase de la pêche que les ruptures du fil sont assez fréquentes.

Ceci constitue naturellement un inconvénient important pour le pêcheur qui, après avoir ferré le poisson, le voit s'échapper avec l'hameçon qui l'a blessé inutilement.

Pour remédier à cet inconvénient il est connu d'intercaler, par exemple entre les deux parties du fil de sections différentes, un dispositif amortisseur élastique travaillant à l'extension. Un tel dispositif est décrit en détail dans le brevet US-A- 2731758. Ce dispositif, dans la forme d'exécution représentée par exemple sur la fig. 13 de ce brevet, comprend essentiellement deux tubes coulissant librement l'un dans l'autre, un ressort interne disposé entre ces tubes et exerçant sur eux une force tendant à les rapprocher l'un de l'autre, enfin un oeillet à une extrémité de chaque tube pour fixer les fils. Dans ces conditions, les tractions provoquées par le poisson alors qu'il se débat une fois pris, sont amorties par le ressort qui, en s'allongeant en réponse à chacune de ces tractions, protège efficacement le fil fin.

Si l'élasticité de l'amortisseur permet d'éviter la rupture du fil, par contre elle présente un désavantage au moment où le pêcheur ferre le poisson. En effet, cette élasticité augmente le temps de réponse de l'hameçon au mouvement du poignet du pêcheur. Ainsi, lorsque celui-ci sent le poisson mordre et qu'il tire sur le fil, l'hameçon ne suit le mouvement du poignet qu'avec un certain retard, retard qui peut être suffisant au poisson pour se dégager et fuir.

La présente invention a pour but de pallier ce désavantage en proposant un accessoire de pêche qui, intercalé par exemple entre les parties à forte et à faible section du fil, permet de ferrer le poisson dans des conditions normales et d'absorber les fortes tensions sur le fil résultant des brisques mouvements du poisson pendant que le pêcheur tente de l'amener vers lui.

Pour atteindre cet objectif, l'accessoire de pêche selon l'invention comprenant :

– un premier corps comportant un organe de fixation d'une extrémité d'une première partie du fil formé de deux parties ;

– un deuxième corps comportant un organe de fixation d'une extrémité de la deuxième partie du fil, l'extrémité libre de l'une des parties portant un hameçon ;

– des moyens de guidage permettant aux deux corps de se déplacer l'un par rapport à l'autre ; et

– un dispositif de rappel disposé entre les deux corps et exerçant sur ces corps, lorsqu'ils sont libres de se déplacer, une force élastique de rappel tendant à ramener ces corps dans une position initiale déterminée,

est particulièrement remarquable en ce qu'il comprend un dispositif de blocage disposé entre les deux corps et conformé de manière à exercer sur ces corps une force de rétention maintenant l'un des corps par rapport à l'autre dans la position initiale, et à permettre aux corps de quitter cette position initiale sous l'effet d'une force, supérieure à la force de rétention, exercée sur l'une des parties du fil.

D'autres caractéristiques et avantages de la présente invention ressortiront de la description qui va suivre, faite en regard du dessin annexé et donnant, à titre explicatif mais nullement limitatif, une forme de réalisation avantageuse d'un tel accessoire de pêche. Sur ce dessin, où les mêmes références se rapportent à des éléments analogues :

– la fig. 1 est une vue en plan d'une forme de réalisation de l'accessoire de pêche selon l'invention ;

– la fig. 2 montre, dans une vue en coupe longitudinale, la construction interne de l'accessoire de pêche représenté sur la fig. 1 ;

– la fig. 3 est une vue en plan d'une autre forme de réalisation de l'invention, comportant un dispositif de réglage de la force de rétention ;

– la fig. 4 montre, dans une vue en coupe longitudinale, la construction interne de l'accessoire de pêche représenté sur la fig. 3 ; et

– la fig. 4a montre, dans une vue en coupe transversale, la construction du dispositif de réglage de la force de rétention.

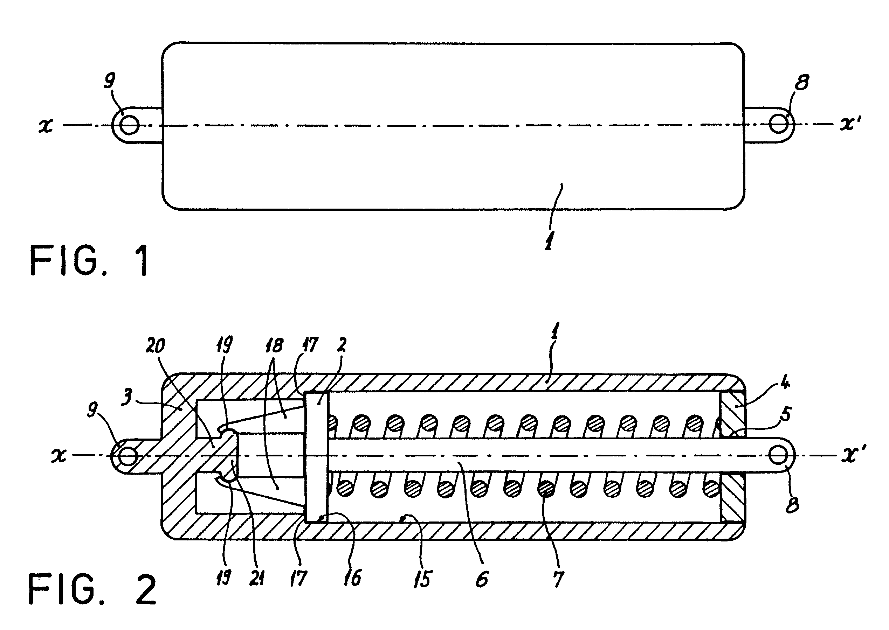

L'accessoire de pêche selon l'invention qui est représenté sur les figures 1 et 2 comprend essentiellement un cylindre de révolution creux 1, et un piston 2 en forme de disque circulaire disposé à l'intérieur du cylindre, les deux éléments présentant un axe de symétrie xx' commun. Les extrémités du cylindre sont obstruées, d'un côté, par une paroi latérale 3 faisant corps avec le cylindre et, de l'autre côté, par une paroi rapportée 4 au centre de laquelle est percé un trou axial 5. Le cylindre 1 a typiquement 15 mm de long et 4 mm de diamètre.

Le piston 2 porte au centre d'une de ses faces latérales une tige circulaire 6, cette tige étant orientée dans la direction de l'axe xx'. Sur la tige 6 est en outre disposé un ressort hélicoïdal 7, le tout se trouvant dans le cylindre 1. La paroi 4 est ensuite fixée sur le cylindre, par exemple en l'introduisant à force dans son logement. La tige 6 traverse alors la paroi 4 par le trou 5, tandis que le ressort s'appuie sur le piston 2 et la paroi 4.

L'extrémité libre de la tige 6 est terminée par un anneau 8 présentant une ouverture intérieure, alors qu'un anneau semblable 9 est disposé sur la face extérieure de la paroi 3. Dans l'un des anneaux 8 ou 9 est introduite et fixée l'extrémité, non représentée, de la partie du fil venant de la canne à pêche, tandis que dans l'autre anneau est introduite et fixée l'extrémité de la partie du fil qui porte l'hameçon.

L'intérieur du cylindre 1 est délimité par une face cylindrique intérieure 15, alors que la périphérie du piston 2 est délimitée par une face cylindrique périphérique 16.

Sur la majeure partie de la longueur du cylindre, entre la paroi 4 et un épaulement 17, la face 15 présente le même diamètre que le piston 2, alors qu'entre l'épaulement 17 et la paroi 3, la face 15 a un diamètre plus faible.

Les faces 15 et 16 sont donc en contact et elles guident le déplacement du piston 2 dans le cylindre 1 entre l'épaulement 17 et la paroi 4. Le guidage est encore amélioré par la tige 6 qui prend appui sur la paroi 4 en passant par le trou 5. Lorsque le piston 2 est en contact avec l'épaulement 17 il occupe une position initiale bien définie dans laquelle le ressort 7 se trouve à l'état détendu.

Le piston 2 porte encore, sur la face latérale située en regard de la paroi 3, une paire de mâchoires 18 présentant une certaine flexibilité radiale. Les deux mâchoires sont disposées symétriquement par rapport à l'axe xx' et leur extrémité libre délimite une gorge 19.

La face intérieure de la paroi 3 est prolongée par une goupille de retenue 20, cette goupille étant terminée par une collerette 21 ayant une forme complémentaire de la gorge 19. Lorsque le piston 2 se trouve dans sa position initiale, la collerette 21 est engagée dans la gorge 19. Les mâchoires 18 exercent alors une pression sur la collerette 21. De cette pression résulte une force de rétention, dirigée axialement, qui a pour effet de maintenir le piston 2 en appui contre l'épaulement 17.

Les mâchoires 18, la collerette 21 et les organes associés forment un dispositif de blocage à détente. Ce dispositif maintient le piston 2 dans sa position initiale tant qu'il ne subit pas une force de traction, de la part du fil, supérieure à la force de rétention. Dès que la force de traction dépasse la force de rétention, le dispositif libère brusquement le piston.

Le fonctionnement de l'accessoire de pêche est le suivant. Le piston 2 doit d'abord être mis dans sa position initiale en appuyant sur l'extrémité libre de la tige 6, puis l'hameçon peut être lancé. Lorsqu'un poisson commence à mordre à l'hameçon, le pêcheur doit le ferrer au moyen d'un mouvement sec du poignet. Etant donné que l'hameçon est très pointu, cette opération ne demande pas une force de traction importante sur le fil, mais une grande rapidité de réaction sinon le poisson risque de s'échapper. La force de rétention sur le piston 2 est déterminée de manière à être supérieure à la force de traction nécessaire pour ferrer le poisson tout en étant inférieure à la force de rupture de la partie la plus fine du fil.

Dans ces conditions, lorsque le pêcheur ferre le poisson, tout se passe comme si le fil était d'un seul tenant puisque le piston 2 ne se déplace pas dans le cylindre 1.

Par contre, le poisson, une fois accroché à l'hameçon, peut produire, en se débattant, des tensions sur le fil pouvant entraîner sa rupture. Cependant, avant que le fil ne casse, le piston 2 se dégage de la position où il a été maintenu par les mâchoires 18 enserrant la collerette 21. Le piston est donc libre de se déplacer en agissant sur le ressort 7 qui, à l'état comprimé, ne doit pas produire une force supérieure à la force de rupture du fil.

Pendant que le pêcheur ramène le poisson vers lui, il n'y a ainsi plus de risque que le fil se rompe puisque les brusques variations de tensions sont dorénavant absorbées par le ressort 7.

La force de rétention créée par l'action des mâchoires 18 sur la collerette 21 doit se situer entre certaines limites, ces limites pouvant dépendre en particulier de la taille du poisson et de la section du fil auquel est fixé l'hameçon. Il peut donc être souhaitable de pouvoir varier la force de rétention en fonction de ces paramètres.

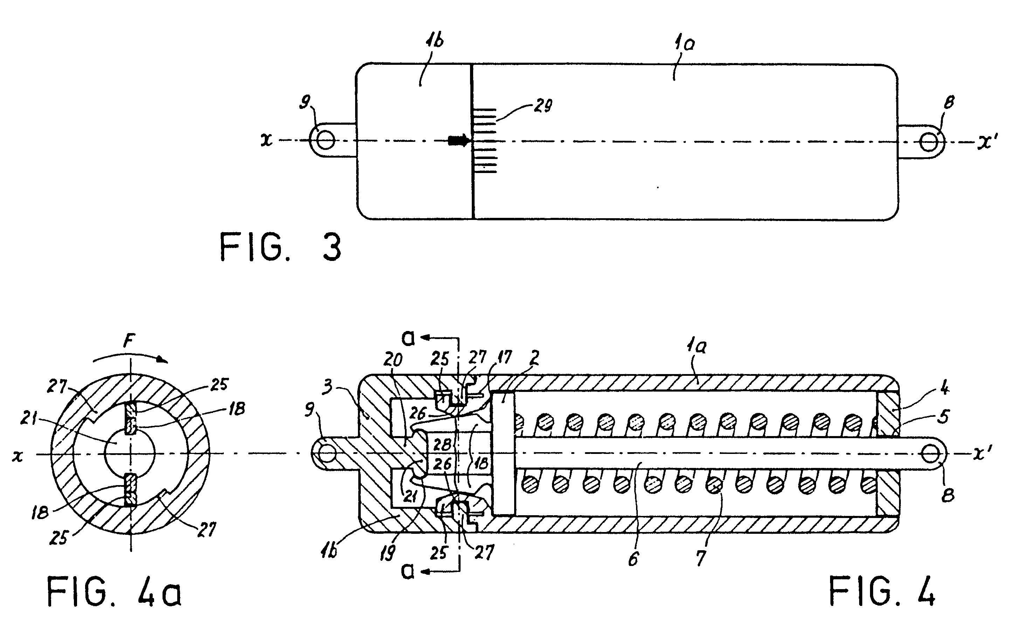

Les fig. 3, 4 et 4a représentent une variante de l'accessoire de pêche permettant de régler facilement la force de rétention. A cet effet le cylindre creux comporte une première partie référencée 1a, dans laquelle coulisse le piston 2, et une deuxième partie, référencée 1b, qui a la forme d'un capuchon pouvant pivoter sur la partie 1a autour de l'axe xx'.

Le piston 2 et les éléments qui l'accompagnent sont disposés à l'intérieur de la partie 1a de la même manière que dans le cylindre 1. La capuchon 1b, de son côté, comporte une paroi latérale identique à la paroi 3, cette paroi supportant l'anneau 9 et la goupille de retenue 20.

Le maintien du capuchon 1b sur la partie 1a du cylindre est obtenu au moyen de deux ergots 25. Ces ergots sont solidaires de la partie 1a tout en présentant une certaine élasticité à l'endroit où les deux éléments se joignent afin de permettre aux ergots de fléchir vers l'axe xx'.

Les ergots 25 comportent en outre une gorge extérieure 26, tandis que sur la face intérieure du capuchon 1b sont disposées deux pistes saillantes 27 venant s'engager dans les gorges 26 afin de maintenir axialement la partie 1b sur la partie 1a.

Chaque piste 27 a par ailleurs la forme d'une spirale, comme cela apparaît sur la fig. 4a. Il en résulte que si le capuchon 1b est déplacé angulairement dans le sens de la flèche F, les pistes 27 feront fléchir les ergots 25 vers l'axe xx'.

En donnant aux mâchoires 18 et aux ergots 25 une forme telle qu'ils viennent en contact en des points 28 situés sensiblement à mi-distance entre le piston 2 et la collerette 21, il est évident que la rotation du capuchon 1b entraînera une variation de la force de rétention dont la valeur pourra être indiquée sur une échelle graduée 29.

Le cylindre et le piston, dans les deux formes d'exécution qui viennent d'être présentées, peuvent avantageusement être réalisés en matière synthétique injectée.

Il est bien entendu que le dispositif de pêche qui a été décrit peut subir différentes modifications et se présenter sous d'autres variantes évidentes à l'homme de l'art, sans sortir du cadre de la présente invention tel que défini par les revendications.

## Revendications

1. Accessoire de pêche comprenant
   – un premier corps (1) comportant un organe de fixation (9) d'une extrémité d'une première partie d'un fil formé de deux parties ;
   – un deuxième corps (2) comportant un organe de fixation (8) d'une extrémité de la deuxième partie dudit fil, l'extrémité libre de l'une desdites parties portant un hameçon ;
   – des moyens de guidage (15, 16) permettant aux deux corps de se déplacer l'un par rapport à l'autre ; et
   – un dispositif de rappel (7) disposé entre les deux corps et exerçant sur ces corps, lorsqu'ils sont libres de se déplacer, une force élastique de rappel tendant à ramener lesdits corps dans une position initiale déterminée,
   caractérisé en ce qu'il comprend un dispositif de blocage (18, 19, 20, 21) disposé entre les deux corps et conformé de manière à exercer sur ces corps une force de rétention maintenant l'un des corps par rapport à l'autre dans ladite position initiale, et à permettre auxdits corps de quitter cette position initiale sous l'effet d'une force, supérieure à la force de rétention, exercée sur l'une des parties dudit fil.

2. Accessoire de pêche selon la revendication 1, caratérisé en ce qu'il comporte en outre des moyens de réglage (1b, 25, 27) de la force de rétention.

3. Accessoire de pêche selon la revendication 1 ou 2, caractérisé en ce que le premier corps est un cylindre creux (1) présentant un axe de symétrie (xx'), ce cylindre étant délimité intérieurement par une face intérieure (15) et aux extrémités par deux parois latérales (3, 4), et en ce que le deuxième corps est un piston (2) coulissant à l'intérieur du cylindre, ce piston, délimité par deux faces latérales et une face périphérique (16), porte en outre sur une des faces latérales une tige (6) centrée sur l'axe de symétrie, cette tige sortant du cylindre par un orifice (5) pratiqué dans une des parois latérales.

4. Accessoire de pêche selon la revendication 3, caractérisé en ce que les moyens de guidage sont constitués par la face intérieure (15) du cylindre et la face périphérique (16) du piston, ces deux faces venant en contact l'une avec l'autre.

5. Accessoire de pêche selon l'une des revendications précédentes, caractérisé en ce que le dispositif de blocage comporte, disposée sur le premier corps, une goupille de retenue (20) terminée par une collerette (21), et, disposée sur le deuxième corps, au moins une paire de mâchoires (18) flexibles, chaque mâchoire délimitant à son extrémité libre une gorge (19) de forme complémentaire de celle de la collerette de manière que la gorge, en prenant place sur la collerette et en exerçant sur elle une pression, détermine ladite position initiale et ladite force de rétention.

6. Accessoire de pêche selon les revendications 3 et 5, caractérisé en ce que ladite goupille (20) est disposée sur la paroi latérale (3) du cylindre (1) qui est opposée à la paroi par laquelle sort la tige, et en ce que ladite paire de mâchoires (18) est disposée sur la face latérale du piston (2) qui est en regard de la goupille.

7. Accessoire de pêche selon l'une des revendications précédentes, caractérisé en ce que le dispositif de rappel est constitué par un ressort (7) disposé entre les deux corps, ce ressort fournissant ladite force de rappel dont l'intensité augmente à mesure que les corps s'éloignent de leur position initiale.

8. Accessoire de pêche selon les revendications 3 et 7, caractérisé en ce que ledit ressort (7) est un ressort hélicoïdal travaillant à la compression, ce ressort étant disposé sur ladite tige (6) en prenant appui sur le piston (2) et sur la paroi latérale (4) par laquelle sort la tige.

9. Accessoire de pêche selon les revendications 2 et 3, caractérisé en ce que lesdits moyens de réglage de la force de rétention comportent au moins une paire de pistes intérieures (27) ayant la forme de spirales, ces pistes étant disposées, dans un plan perpendiculaire à l'axe de symétrie, sur une partie mobile (1b) en rotation du cylindre, chaque piste venant appuyer, avec une force variable dépendant de la position angulaire de la partie mobile, par l'intermédiaire d'un ergot flexible (25) solidaire du cylindre, sur une mâchoire (18) afin de régler sa pression sur la collerette (21).

10. Accessoire de pêche selon l'une des revendications précédentes, caractérisé en ce que le premier (1) et le deuxième (2) corps sont réalisés en matière synthétique.

## Ansprüche

1. Angelzubehörteil
– mit einem ersten Bauteil (1), das ein Befestigungsorgan (9) eines Endes eines ersten Teils einer von zwei Teilen gebildeten Schnur aufweist
– mit einem zweiten Bauteil (2), das ein Befestigungsorgan (8) eines Endes des zweiten Teils der erwähnten Schnur aufweist, wobei das freie Ende des einen der erwähnten Teile einen Angelhaken trägt,
– mit Führungseinrichtungen (15, 16), die es den zwei Bauteilen ermöglichen, sich bezüglich einander zu verschieben, und
– mit einer zwischen den beiden Bauteilen gelagerten Rückstellvorrichtung (7), die auf diese Bauteile, wenn sie frei sind, sich zu verschieben, eine elastische Rückstellkraft ausübt, um die zwei Bauteile in eine festgelegte Ausgangsstellung zurückzubringen, dadurch **gekennzeichnet**, daß es eine Blockiervorrichtung (18, 19, 20, 21) aufweist, die zwischen den beiden Bauteilen angeordnet und so gestaltet ist, daß sie auf diese Bauteile eine Haltekraft ausübt, die das eine der Bauteile bezüglich des anderen in der Ausgangsstellung hält, und daß sie es den erwähnten Bauteilen ermöglicht, unter der Einwirkung einer Kraft, die größer ist als die Haltekraft, die auf eines der Teile des erwähnten Fadens ausgeübt wird, diese Ausgangsstellung zu verlassen.

2. Angelzubehörteil nach Anspruch 1, dadurch **gekennzeichnet**, daß es außerdem Reguliereinrichtungen (1b, 25, 27) für die Haltekraft aufweist.

3. Angelzubehörteil nach Anspruch 1 oder 2, dadurch **gekennzeichnet**, daß das erste Bauteil ein hohler Zylinder (1) mit einer Symmetrieachse (x, x') ist, der im Inneren von einer Innenfläche (15) und an den Enden von zwei Seitenwänden (3, 4) begrenzt ist, und daß das zweite Bauteil ein Kolben (2) ist, der im Inneren des Zylinders verschiebbar ist, und der, begrenzt von zwei Seitenflächen und einer Umfangsfläche (16), außerdem auf einer der Seitenflächen eine auf der Symmetrieachse zentrierte Stange (6) trägt, welche aus dem Zylinder durch eine in einer der Seitenflächen ausgebildete Öffnung (5) austritt.

4. Angelzubehörteil nach Anspruch 3, dadurch **gekennzeichnet**, daß die Führungseinrichtungen von der Innenfläche (15) des Zylinders und der Umfangsfläche (16) des Kolbens gebildet werden, wobei diese beiden Flächen in Berührung miteinander kommen.

5. Angelzubehörteil nach einem der vorhergehenden Ansprüche, dadurch **gekennzeichnet**, daß die Blockiervorrichtung – angeordnet auf dem ersten Bauteil – einen mit einem Bund (21) endenden Haltestift (20) und – angeordnet auf dem zweiten Bauteil – wenigstens ein Paar flexibler Backen (18) aufweist, wobei jeder Backen an seinem freien Ende eine Nut (19) begrenzt, deren Form zu der des Bundes komplementär ist, so daß die Nut, wenn sie auf dem Bund sitzt und einen Druck auf ihn ausübt, die erwähnte Ausgangsstellung und die erwähnte Haltekraft bestimmt.

6. Angelzubehörteil nach den Ansprüchen 3 und 5, dadurch **gekennzeichnet**, daß der Stift (20) auf der Seitenwand (3) des Zylinders (1) angeordnet ist, die der Wand, durch die die Stange austritt, gegenüberliegt, und daß das Paar von Backen (18) auf der Seitenfläche des Kolbens (2) angeordnet ist, die dem Stift gegenüberliegt.

7. Angelzubehörteil nach einem der vorhergehenden Ansprüche, dadurch **gekennzeichnet**, daß die Rückstellvorrichtung von einer zwischen den beiden Bauteilen angeordneten Feder (7) gebildet wird, die die Rückstellkraft liefert, deren Stärke um so mehr ansteigt, je mehr sich die Bauteile aus ihrer Ausgangsstellung entfernen.

8. Angelzubehörteil nach den Ansprüchen 3 und 7, dadurch **gekennzeichnet**, daß die Feder (7) eine Schraubendruckfeder ist, welche auf der Stange (6) angeordnet ist, und an dem Kolben (2) und an der Seitenwand (4) anliegt, durch die die Stange vorsteht.

9. Angelzubehörteil nach den Ansprüchen 2 und 3, dadurch **gekennzeichnet**, daß die Reguliereinrichtungen für die Haltekraft wenigstens ein Paar von spiralförmigen, inneren Flächenbahnen (27) aufweist, die in einer zu der Symmetrieachse senkrechten Ebene auf einem drehbeweglichen Teil (1b) des Zylinders angeordnet sind, wobei jede Flächenbahn mit einer variablen Kraft, die von der Winkelposition des beweglichen Teils abhängt, mit Hilfe eines zylinderfesten, flexiblen Nockens (25) auf einem Backen (18) zum Anliegen kommt, um seinen Druck auf den Bund (21) zu regulieren.

10. Angelzubehörteil nach einem der vorhergehenden Ansprüche, dadurch **gekennzeichnet**, daß das erste (1) und das zweite (2) Bauteil aus Kunststoff hergestellt sind.

## Claims

1. Fishing accessory comprising :
- a first body (1) having a means (9) for securing one end of a first part of a line formed in two parts;
- a second body (2) having a means (8) for securing one end of the second part of the said line, the free end of one of the said parts carrying a hook ;
- guide means (15, 16) enabling the two bodies to move in relation to one another ;
- a return device (7) arranged between the two bodies and exerting on these bodies, when they are free to move, an elastic return force which tends to return the said bodies to a pre-determined initial position, **characterised in that** it comprises a locking device (18, 19, 20, 21) arranged between the two bodies and formed so that it exerts on these bodies a retaining force maintaining one of these bodies in relation to the other in the said initial position, and for enabling the said bodies to leave this initial position under the effect of a force, greater than the retaining force, exerted on one of the parts of the said line.

2. Fishing accessory according to claim 1, **characterised in that** it further comprises means (1b, 25, 27) for adjusting the retaining force.

3. Fishing accessory according to claim 1 or 2, **characterised in that** the first body is a hollow cylinder (1) having an axis of symmetry (xx'), this cylinder being internally delimited by an inner surface (15) and, at the ends, by two end walls (3, 4), and in that the second body is a piston (2) which slides within the cylinder, this piston being delimited by two end surfaces and a peripheral surface (16), and further carrying, on one of its end surfaces, a rod (6) centred upon the axis of symmetry, this rod exiting the cylinder by an opening (5) formed in one of the end walls.

4. Fishing accessory according to claim 3, **characterised in that** the guide means are formed by the inner surface (15) of the cylinder and the peripheral surface (16) of the piston, these two surfaces coming into contact with one another.

5. Fishing accessory according to one of the preceding claims, **characterised in that** the locking device comprises, arranged on the first body, a retaining pin (20) ending in a flange (21) and, arranged on the second body, at least one pair of flexible jaws (18), each jaw delimiting at its free end a groove (19), the shape of which is complementary to that of the flange, so that the groove, by engaging with the flange and exerting a pressure thereon, determines the said initial position and the said retaining force.

6. Fishing accessory according to claims 3 and 5, **characterised in that** the said pin (20) is arranged on the end wall (3) of the cylinder (1), opposite the wall through which the rod exits, and in that the said pair of jaws (18) is arranged on the end surface of the piston (2), facing the pin.

7. Fishing accessory according to one of the preceding claims, **characterised in that** the return device is formed by a spring (7) arranged between the two bodies, this spring providing the said return force, the intensity of which increases as the bodies move away from their initial position.

8. Fishing accessory according to claims 3 and 7, **characterised in that** the said spring (7) is a helical compression spring, this spring being arranged over the said rod (6) and being supported against the piston (2) and on the side wall (4) through which the rod exits.

9. Fishing accessory according to claims 2 and 3, **characterised in that** the said means for adjusting the retaining force comprise at least one pair of internal, spirally shaped tracks (27) arranged in a plane perpendicular to the axis of symmetry on a rotatable part (1b) of the cylinder, each track coming to bear against a jaw (18), with a force which varies depending on the angular position of the rotatable part, by way of a flexible pin (25) which is integral with the cylinder, in order to adjust the pressure this jaw (18) exerts on the flange (21).

10. Fishing accessory according to one of the preceding claims, **characterised in that** the first body (1) and the second body (2) are produced from a synthetic material.

FIG. 1

FIG. 2

FIG. 3

FIG. 4

FIG. 4a